# EUROPEAN PATENT SPECIFICATION

(11) **EP 0 343 997 B1**
(45) Date of publication and mention of the grant of the patent: **17.04.1996**
(21) Application number: 89305326.4
(22) Date of filing: 25.05.1989
(51) Int. Cl.: H04N 1/191

(54) **Image sensing apparatus**
Bildsensorvorrichtung
Appareil capteur d'images

(30) Priority: 26.05.1988 JP 130509/88
(43) Date of publication of application: 29.11.1989
(73) Proprietor: SEIKO INSTRUMENTS INC., Tokyo 136 (JP)
(72) Inventor: Kawahara, Yukito, Koto-ku Tokyo (JP); Machida, Satoshi, Koto-ku Tokyo (JP); Mukainakano, Hiroshi, Koto-ku Tokyo (JP)
(74) Representative: Sturt, Clifford Mark

(56) References cited:
- US-A- 4 663 672
- US-A- 4 745 480
- JAPAN TELECOMM. REV., vol. 19, no. 3, July 1977, pages 209-216; M. ORII et al.: ""Mini fax" - A trial small-size facsimile -"

## Description

The present invention relates to image sensing (or reading) apparatus for converting optical image information into electrical signals, and more specifically, relates to image sensing apparatus of the integrated type having a plurality of electro-optical conversion elements aligned linearly in a row.

Recently, image sensing apparatus has been widely used in facsimiles and word processors for reading and inputting characters and figures as image data. Conventionally, such apparatus is comprised of a plurality of electro-optical conversion elements for converting image information into electrical signals corresponding switching elements and a scanning circuit for sequentially reading the electrical signals obtained by the electro-optical conversion elements, and a control circuit for controlling the switching elements and the scanning circuit.

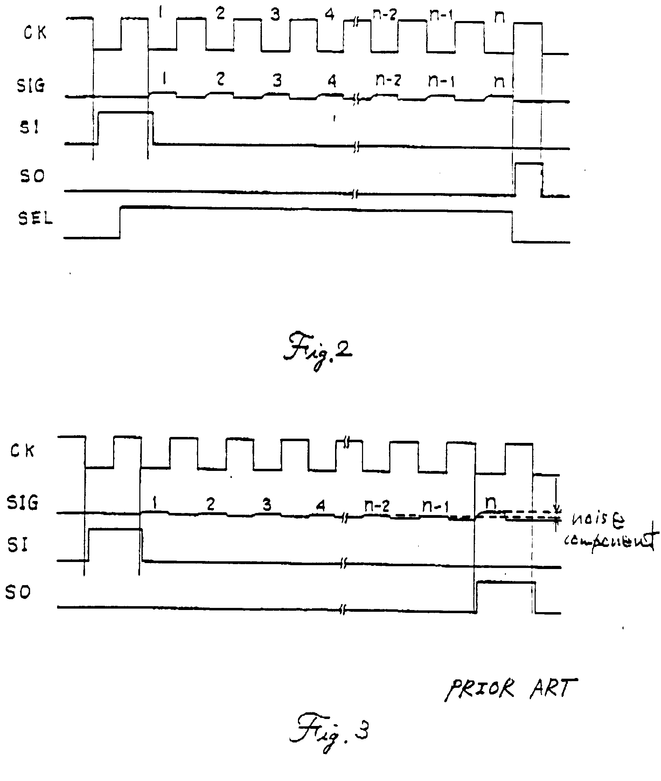

Figure 3 is a timing chart showing the operation of a conventional image sensing apparatus of the line scanning type. A scanning circuit receives an initiating signal SI effective to initiate each line scanning of n linearly arranged electro-optical conversion elements through corresponding switching elements and outputs an ending signal SO indicative of ending of each line scanning when the n-th conversion element is accessed to read out a corresponding n-th electrical signal SIG. The scanning circuit is responsive to clock pulses CK to scan sequentially the conversion elements. The scanning circuit is comprised of n flip-flops, and the last flip-flop produces an output pulse, which is used directly as the ending signal SO so that it coincides to the n-th electrical signal SIG.

Accordingly, in the above described conventional image reading apparatus, the n-th electrical signal SIG produced by the n-th conversion element includes switching noise due to the ending signal SO. Therefore, the signal-to-noise ration (S/N ratio) is reduced and this is a drawback.

The present invention seeks to provide image sensing apparatus which avoids the reduction of S/N ratio of the electrical signal of the last electro-optical conversion element in spite of the occurrence of an ending signal for a scanning operation.

According to one aspect of the present invention there is provided an image sensing apparatus comprising : a plurality of electro-optical conversion elements arranged integrally in a row to constitute a line image sensor for effecting electro-optical conversion to produce respective image signals; a plurality of switching elements connected to the corresponding conversion elements and switchable between ON and OFF states to read out the corresponding respective image signals; a scanning circuit for generating scanning pulses for scanning sequentially the switching elements to turn them ON thereby to effect the sequential reading of the image signals; an initiating signal generating circuit connected to the scanning circuit for generating an initiating signal effective to initiate the scanning circuit; characterised by an ending signal generating circuit connected to the scanning circuit which generates an ending signal indicative of the end of the scanning operation, said signal being shifted with respect to the last scanning pulse so that the leading edge of the ending signal occurs after the last scanning pulse has terminated; a control circuit which receives the initiating and ending signals to produce a control signal which has a first state between receipt of the initiating signal and receipt of the ending signal, the signal otherwise having a second state; and a switching circuit switched according to the control signal to control the output of the image signals so they are only output when the control signal has said first state.

Preferably, each of the switching elements comprises a MOS transistor.

The invention is illustrated, merely by way of example, in the accompanying drawings, in which:-
Figure 1 is a schematic block diagram of one embodiment of an image sensing apparatus according to the present invention;
Figure 2 is a timing chart to illustrate the operation of the image sensing apparatus of Figure 1; and
Figure 3 is a timing chart to illustrate the operation of a conventional image sensing apparatus.

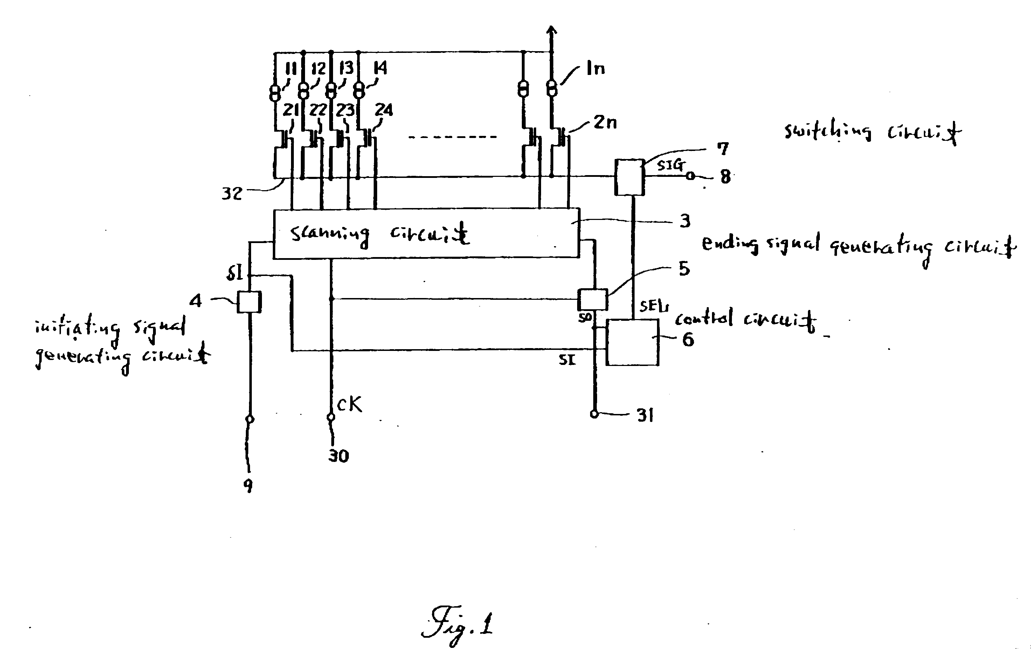

As shown in Figure 1, the inventive image reading or sensing apparatus includes a plurality of opto-electro conversion elements 11, 12,..., 1n arranged integrally in a row to constitute a line image sensor. Each of the conversion elements operates to convert bit image information into a corresponding bit electrical signal. A plurality of switching elements 21, 22,..., 2n are connected between the corresponding respective conversion elements 11, 12,..., 1n and a common output signal line 32, and are operable to switch between ON and OFF states selectively to feed the corresponding bit electrical signals to the common output signal line 32. A scanning circuit 3 is composed of, for example, a plurality of multi-stage flip-flops and is connected to the switching elements 21, 22, ..., 2n for sequentially scanning them and to selectively switch them. The scanning circuit 3 is responsive to clock pulses CK fed from a clock input terminal 30 sequentially to produce scanning pulses effective sequentially to turn ON the switching elements 21, 22, ..., 2n in order. An initiating signal generating circuit 4 is connected between a pulse input terminal 9 and the scanning circuit 3 for generating an initiating signal SI effective to initiate the scanning circuit 3 to start the scanning operation. An ending signal generating circuit 5 is connected to the last stage flip-flop of the scanning circuit 3 and operative after the last switching element 2n is turned OFF for generating an ending signal SO to an output terminal 31 indicating that the scanning operation of one line is completed. In an image sensing apparatus of multi-chip line sensor type, this ending signal SO is utilised as the next initiating signal SI for initating the next line scanning operation. A control circuit 6 receives the initiating signal SI and the ending signal SO and produces a controlling or selecting signal SEL. An additional switching or gate circuit 7 is connected to the common image signal line 32 and is driven according to the controlling signal SEL to feed sequentially an electric bit image signal SIG to an image signal output terminal 8.

Figure 2 is a timing chart illustrating the reading or sensing operation of the image sensing apparatus of Figure 1. The scanning circuit 3 is initiated in response to the initiating signal SI to start the sequential scanning of the switching elements 21, 22, ..., 2n sequentially to turn them on thereby to transfer the bit image signals SIG produced by the corresponding conversion elements 11, 12, ..., 1n to the common image signal line 32. In order to turn on the i-th switching element 2i (i = 1, 2, ..., n), the scanning circuit 3 is driven in response to the trailing edge of the i-th clock pulse CK to produce a scanning pulse effective to turn on the corresponding i-th switching element 2i for the duration during which the i-th clock pulse is held low level. Consequently, the i-th bit image signal SIG generated by the i-th conversion element 1i (i = 1, 2, ..., n) is transferred through the corresponding conductive i-th switching element to the common image signal line 32. The transferred i-th bit image signal is outputted through the switching circuit 7 to the image signal output terminal 8.

The ending signal generating circuit 5 is operated immediately after the last n-th bit image signal is outputted from the n-th conversion element 1n for generating the ending signal SO. As opposed to the conventional operation shown in Figure 3, the ending signal SO does not coincide to the last bit image signal, but is shifted therefrom so that the last bit image signal does not have an added noise component due to the ending signal Therefore, even when reading or sensing a dark image, each bit image signal SIG has uniform signal level substantially free from noise as shown in Figure 2.

Lastly, the controlling circuit 6 produces the control signal SEL during one line scanning operation immediately after the occurrence of initiating signal SI and immediately before the occurrence of the ending signal SO. The control signal SEL is effective to turn on the switching circuit 7 only during each line scanning operation thereby sequentially to output a series of bit image signals SIG from the common image signal line 32 to the image signal output terminal 8.

Though each switching element is composed of a single MOS transistor for simplification in the embodiment shown in Figure 1, each switching element may be composed of CMOS transistors. Further, the scanning circuit 3 is driven in response to the trailing edges of the clock pulses CK, but it may be driven in response to the leading edges of the clock pulses CK. In such a case, the other circuits may need to be modified accordingly.

Thus, in the image sensing apparatus of Figure 1, the ending signal indicative of the ending of one line scanning is produced after the last bit image signal is read out from the last conversion element to prevent noise due to the ending signal from being superposed on the bit image signal thereby to achieve the advantage that the S/N ratio of the image sensing apparatus is improved.

## Claims

1. An image sensing apparatus comprising: a plurality of electro-optical conversion elements (11,12,...,1n) arranged integrally in a row to constitute a line image sensor for effecting electro-optical conversion to produce respective image signals (SIG); a plurality of switching elements (21, 22,...,2n) connected to the corresponding conversion elements and switchable between ON and OFF states to read out the corresponding respective image signals (SIG); a scanning circuit (3) for generating scanning pulses (CK) for scanning sequentially the switching elements (21, 22,...,2n) to turn them ON thereby to effect the sequential reading of the image signals (SIG); an initiating signal (SI) generating circuit (4) connected to the scanning circuit (3) for generating an initiating signal effective to initiate the scanning circuit; characterised by an ending signal (SO) generating circuit (5) connected to the scanning circuit (3) which generates an ending signal indicative of the end of the scanning operation, said signal (SO) being shifted with respect to the last scanning pulse (n) so that the leading edge of the ending signal (SO) occurs after the last scanning pulse (n) has terminated; a control circuit (6) which receives the initiating and ending signals to produce a control signal (SEL) which has a first state between receipt of the initiating signal and receipt of the ending signal, the signal otherwise having a second state; and a switching circuit (7) switched according to the control signal to control the output of the image signals (SIG) so they are only output when the control signal (SEL) has said first state.

2. An image sensing apparatus as claimed in claim 1 characterised in that each of the switching elements (21,22,...2n) comprises a MOS transistor.

3. An image sensing apparatus as claimed in any preceding claim, characterised in that the ending signal (SO) is supplied as the initiating signal (SI) for initiating the scanning circuit for the next line scanning operation.

## Patentansprüche

1. Bildabtastvorrichtung umfassend:
eine integral in einer Reihe zum Bilden eines Zeilenbildsensors angeordnete Mehrzahl von elektro-optischen Umwandlungselementen (11,12,...,1n), um zum Erzeugen jeweiliger Bildsignale (SIG) elektro-optische Umwandlung zu bewirken;
eine Mehrzahl von Schaltelementen (21,22,...,2n), die mit den entsprechenden Umwandlungselementen verbunden sind und zwischen AN- und AUS-Zuständen schaltbar sind, um die entsprechenden jeweiligen Bildsignale (SIG) auszulesen;
eine Abtastschaltung (3) zum Erzeugen von Abtastpulsen (CK) zum sequentiellen Abtasten der Schaltelemente (21,22,...,2n), um diese AN-zuschalten und hierdurch das sequentielle Lesen der Bildsignale (SIG) zu bewirken;
eine Startsignal-(SI)-Erzeugungsschaltung (4), die mit der Abtastschaltung (3) zum Erzeugen eines Startsignals verbunden ist, das einen Start der Abtastschaltung bewirkt;
**gekennzeichnet durch**:
eine mit der Abtastschaltung (3) verbundene Stopsignal-(SO)-Erzeugungsschaltung (5), die ein das Ende des Abtastvorgangs anzeigendes Stopsignal erzeugt, wobei das Signal (SO) bezüglich des letzten Abtastpulses (n) derart verschoben ist, daß die führende Flanke des Stopsignals (SO) nach dem Ende des letzten Abtastpulses (n) auftritt;
eine Steuerschaltung (6), die das Start- und das Stopsignal empfängt, um ein Steuersignal (SEL) zu erzeugen, das einen ersten Zustand zwischen dem Empfang des Startsignals und dem Empfang des Stopsignals aufweist, wobei das Signal sonst einen zweiten Zustand aufweist; und
einen gemäß dem Steuersignal geschalteten Schaltkreis (7) zum Steuern der Ausgabe der Bildsignale (SIG) derart, daß sie nur ausgegeben werden, wenn das Steuersignal (SEL) den ersten Zustand aufweist.

2. Bildabtastvorrichtung nach Anspruch 1,
dadurch gekennzeichnet,
daß jedes der Schaltelemente (21,22,...,2n) einen MOS-Transistor umfaßt.

3. Abtastvorrichtung nach einem der vorhergehenden Ansprüche, dadurch gekennzeichnet, daß das Stopsignal (SO) als das Startsignal (SI) zum Starten der Abtastschaltung für den nächsten Zeilenabtastvorgang zugeführt wird.

## Revendications

1. Dispositif de détection d'image, comprenant une pluralité d'éléments (11,12,....1n) de conversion électro-optiques disposés intégralement dans une rangée pour constituer un détecteur d'image en ligne destiné à effectuer une conversion électro-optique pour produire des signaux (SIG) d'image respectifs, une pluralité d'éléments (21,22,...2n) de commutation connectés aux éléments de conversion correspondants et pouvant être commutés sur des états OUVERT et FERME pour lire les signaux (SIG) d'image respectifs correspondants; un circuit (3) de balayage destiné à produire des impulsions (CK) de balayage pour balayer successivement les éléments (21,22,...2n) de commutation pour les faire passer sur l'état OUVERT, entraînant ainsi la lecture successive des signaux (SIG) d'image; un circuit (4) de production de signal (SI) d'initialisation qui est connecté au circuit (3) de balayage pour produire un signal d'initialisation qui est propre à mettre en fonctionnement le circuit de balayage; caractérisé par un circuit (5) de production de signal (SO) de fin connecté au circuit (3) de balayage qui produit un signal de fin indiquant la fin de l'opération de balayage, le signal (SO) étant décalé par rapport à la dernière impulsion (n) de balayage de sorte que le bord d'attaque du signal (SO) de fin ait lieu après que la dernière impulsion (n) de balayage est achevée, un circuit (6) de commande qui reçoit les signaux d'initialisation et de fin pour produire un signal (SEL) de commande qui a un premier état entre la réception du signal d'initialisation et la réception du signal de fin, le signal ayant sinon second état, et un circuit (7) de commutation commuté en fonction du signal de commande pour commander la sortie des signaux (SIG) d'image de sorte qu'ils ne sont émis que lorsque le signal (SEL) de commande est dans le dit premier état.

2. Dispositif de détection d'image suivant la revendication 1 caractérisé en ce que chacun des éléments (21,22,...2n) de commutation comporte un transistor MOS.

3. Dispositif de détection d'image suivant l'une quelconque des revendications précédentes, caractérisé en ce que le signal (SO) de fin est fourni en tant que signal (SI) d'initialisation pour mettre en fonctionnement le circuit de balayage pour l'opération de balayage de ligne suivante.
